# EUROPÄISCHE PATENTSCHRIFT

(11) **EP 3 134 302 B1**
(45) Veröffentlichungstag und Bekanntmachung des Hinweises auf die Patenterteilung: **12.05.2021**
(21) Anmeldenummer: 15709947.4
(22) Anmeldetag: 16.03.2015
(51) Int. Cl.: B60T 8/34, B60T 8/48

(54) **SCHLUPFREGELBARE FAHRZEUGBREMSANLAGE**
SLIP-CONTROLLABLE VEHICLE BRAKE SYSTEM
SYSTÈME DE FREINAGE DE VÉHICULE À RÉGULATION DU PATINAGE

(30) Priorität: 22.04.2014 DE 102014207538
(43) Veröffentlichungstag der Anmeldung: 01.03.2017
(73) Patentinhaber: Robert Bosch GmbH, 70442 Stuttgart (DE)
(72) Erfinder: SCHULLER, Wolfgang, 74389 Cleebronn (DE); OEZKAN, Goekhan, 71732 Tamm (DE)
(86) Internationale Anmeldenummer: PCT/EP2015/055399
(87) Internationale Veröffentlichungsnummer: WO 2015/161958

(56) Entgegenhaltungen:
- DE-A1-102010 030 921
- DE-A1-102010 042 534
- US-A1- 2013 193 748

## Beschreibung

### Stand der Technik

### Offenbarung der Erfindung

### Stand der Technik

Die Erfindung betrifft eine schlupfregelbare Fahrzeugbremsanlage, aufgebaut nach den gattunsbildenden Merkmalen des Anspruchs 1. Eine derartige Fahrzeugbremsanlage ist beispielsweise bekannt aus der DE 102010042534 A1.

Diese bekannte Fahrzeugbremsanlage umfasst ein Hydraulikaggregat mit einem daran angeschlossenen Hauptbremszylinder und ebenfalls daran angeschlossenen Radbremsen. Zur Versorgung der Fahrzeugbremsanlage mit Bremsdruck ist der Hauptbremszylinder vom Fahrer des Fahrzeugs durch Muskelkarft betätigbar. Der Bremsdruck wird den Radbremsen zugeführt und von Steuer- und Regeleinrichtungen des Hydraulikaggregats an die momentan voherrschenden Schlupfverhältnisse an den, den Radbremsen zugeordneten Fahrzeugrädern angepasst. Hierzu sind am Hydraulikaggregat sogenannte Druckaufbauventile und Druckabsenkventile vorhanden, die jeweils paarweise einer jeden Radbremse zugeordnet sind. Die Druckaufbauventile steuern einen Druckmittelzufluß zu den Radbremsen für den Fall einer notwendigen Bremsdruckerhöhung, während die Druckabsenkventile einen Druckmittelabfluss gestatten, falls der Bremsdruck an der Radbremse zu hoch sein sollte und das Rad zu blockieren droht.

Zur Bremsdruckregulierung ist am Hydraulikaggregat ferner ein antreibbarer Druckerzeuger vorhanden, der mit seiner Saugseite an einen vom Druckabsenkventil gesteuerten Rücklauf der Radbremsen angeschlossen ist. Über das Druckabsenkventil wird Druckmittel aus den Radbremsen weg gefördert. Eine Druckseite des Druckerzeugers ist mit einem vom Druckaufbauventil gesteuerten Zulauf der Radbremse verbunden. Zur Steuerung des Druckmittelflusses durch den Druckerzeuger hindurch ist dieser saugseitig mit einem Pumpeneinlassventil und druckseitig einem Pumpenauslassventil bestückt.

Mit der Druckseite des Druckerzeugers ist zudem der Hauptbremszylinder der Fahrzeugbremsanlage verbunden. Dies hat zur Folge, dass bei betätigtem Hauptbremszylinder der erhöhte Bremsdruck an der Druckseite des Druckerzeugers anliegt und damit dessen Anlaufen erschwert. Dieser Fall tritt insbesondere bei ABS-Bremsvorgängen auf, bei denen der Bremsdruck vom Fahrer erzeugt wird und bei dem der Druckerzeuger anläuft um den Bremsdruck zu regeln. Um trotz anstehendem Gegendruck das Anlaufen des Druckerzeugers zu ermöglichen, ist dessen Antrieb entsprechend leistungsfähig ausgelegt, baut dafür aber relativ groß und schwer.

Neue Systemfunktionen, wie z.B. Fußgängerschutz, verschärfen das oben erläuerte Problem. Sie erfordern einen besonders schnellen Aufbau des Bremsdrucks an den Radbremsen und setzen voraus, dass in immer kürzerer Zeit immer mehr Druckmittelvolumen den Radbremsen zugeführt werden kann. Eine dazu notwendige konstruktiv angepasste Auslegung des Druckerzeugers wirkt sich darin aus, dass dessen Antrieb nochmals leistungsfähiger auszulegen ist und deshalb abermals größer und schwerer baut. Kompakte Abmessungen und ein geringes Gewicht sind jedoch Grundvoraussetzungen im Fahrzeugbau.

### Vorteile der Erfindung

Ein Gegenstand nach den Merkmalen des Anspruchs 1 hat demgegenüber den Vorteil, dass er mit einem besonders kompakt bauenden und leichten Antrieb für den Druckerzeuger auskommt, obwohl der Druckerzeuger in der Lage ist besonders schnell ein großes Druckmittelvolumen zu fördern. Der Anlaufstrom des Antriebs des Druckerzeugers ist gegenüber konventionellen Auslegungen niedrig, weil das hohe Druckniveau des Hauptbremszylinders durch vorsehen von geeigneten Mitteln stromabwärts des Pumpenauslassventils zumindest beim unmittelbaren Anlaufen des Druckerzeugers nicht mehr an der Pumpendruckseite anliegt und dadurch dem Anlaufen des Druckerzeugers nicht mehr entgegen wirkt.

Weitere Vorteile oder vorteilhafte Weiterbildungen der Erfindung ergeben sich aus den Unteransprüchen und/oder der nachfolgenden Beschreibung.

Geeignete Mittel sind insbesondere Rückschlagventile, die in Förderrichtung des Druckerzeugers durchströmbar sind und in Gegenrichtung dazu sperren. Bevorzugt auf Grund ihres einfachen, kostengünstigen Aufbaus und ihres störungsfreien Betriebs werden federlose, druckmittelbetätigte Rückschlagventile eingesetzt, die einen Ventilsitz und einen diesen Ventilsitz steuernden Ventilschließkörper aufweisen. Der Ventilschließkörper kann als Kugel oder als Ventilplatte ausgebildet sein. Derartige Rückschlagventile können mit dem Druckerzeuger eine gemeinsame Baueinheit bilden und lassen sich dann ohne Mehraufwand zusammen mit diesem an einem Gebäudeblock eines Hydraulikaggregats der Fahrzeugbremsanlage befestigen.

Wird als Druckerzeuger eine konventionelle Hubkolbenpumpe eingesetzt, so kann diese zur Dämpfung von Druckpulsationen mit einer Pulsationsdämpfungseinrichtung versehen sein, welche sich in Strömungsrichtung zwischen dem Pumpenauslassventil und dem Rückschlagventil anordnen lässt. Pulsationsdämpfungseinrichtungen umfassen eine in ihrem Volumen veränderliche Dämpfungskammer (sogenanntes C-Glied) und ein nachgeordnetes Drosselelement (sogenanntes R-Glied). Das Volumen der Dämpfungskammer ist idealer Weise derart auf das Fördervolumen der Hubkolbenpumpe abgestimmt, dass die Dämpfungskammer zumindest das Druckmittelvolumen eines Förderhubs der Hubkolbenpumpe aufnehmen kann. Diese Auslegung stellt sicher, dass die Hubkolbenpumpe zumindest das Volumen ihres ersten Förderhubs in die Dämpferkammer fördert, so dass der Pumpenantrieb zumindest unmittelbar zu Beginn der Druckmittelförderung nicht gegen den Druck des Hauptbremszylinders erfolgt und der Antrieb einen entsprechend geringeren Anlaufstrom aufweist. Nach erfolgtem Anlaufen des Druckerzeugers ist eine Druckmittelförderung auch entgegen dem Druck des Hauptbremszyilnders mit deutlich geringerer Strombelastung möglich, als dies bei einem mit Gegendruck belasteten Anlaufen möglich wäre. Letztlich ist somit ein kompakter bauender, leichterer und kostengünstigerer Pumpenantrieb einsetzbar.

### Zeichnung

Ein Ausführungsbeispiel der Erfindung ist in der Zeichnung dargestellt und in der nachfolgenden Beschreibung detailliert erläutert. Die Figuren zeigen:
Figur 1: den Hydraulikschaltplan eines Bremskreises einer erfindungsgemäß modifizierten schlupfregelbaren Fahrzeugbremsanlage;
Figur 2: den Hydraulikschaltplan einer Pulsationsdämpfungsvorrichtung zur Dämpfung von Druckpulsationen auf der Druckseite eines in Form einer Hubkolbenpumpe ausgebildeten Druckerzeugers.

### Beschreibung der Ausführungsbeispiele

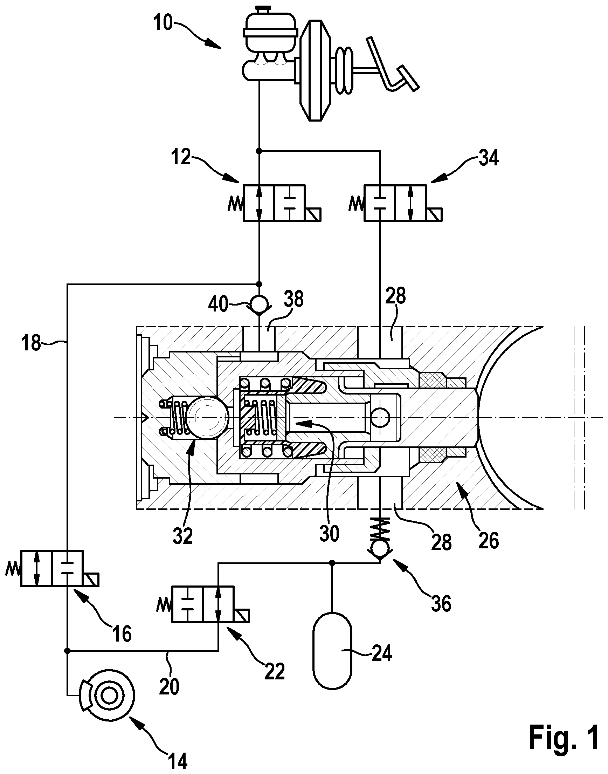

Der in Figur 1 dargestellte Hydraulikschaltplan zeigt einen in wesentlichen Teilen bekannten Bremskreis einer schlupfgeregelten Fahrzeugbremsanlage anhand von Schaltsymbolen. Dieser Bremskreis umfasst unter anderem einen vom Fahrer durch Muskelkraft betätigbaren Hauptbremszylinder 10. Über ein Umschaltventil 12 ist eine Verbindung des Bremskreises mit dem Hauptbremszylinder 10 steuerbar. Das Umschaltventil 12 ist in seiner Grundstellung offen und kann durch elektromagentische Betätigung in eine Sperrstellung umgeschaltet werden. In der Sperrstellung des Umschaltventils 12 lässt sich vom Fahrer der Bremsdruck an einer mit dem Bremskreis verbundenen Radbremse 14 nicht ändern.

Stromabwärts des Umschaltventils 12 verzweigt sich der Bremskreis. Ein Leitungszweig führt über ein Druckaufbauventil 16, in Form eines normal offenen 2/2-Wege-Schaltventils, zur Radbremse 14 und bildet damit deren Zulauf 18.

Unmittelbar vor dem Anschluss der Radbremse 14 zweigt ein Rücklauf 20 vom Zulauf 18 ab. Dieser Rücklauf 20 wird von einem Druckabsenkventil 22 gesteuert, das normal geschlossen ist und elektromagnetisch in eine Durchlassstellung umschaltbar ist. Bei offenem Rücklauf 20 kann Druckmittel aus der Radbremse 14 in Richtung eines Pufferspeichers 24 abfließen, um den Bremsdruck an der Radbremse 14 abzusenken. Es ist denkbar, auf den Pufferspeicher 24 zu verzichten und den Rücklauf direkt an die Saugseite eines extern antreibbaren Druckerzeugers 26 anzuschließen.

Beim dargestellten Druckerzeuger 26 handelt es sich um eine Hubkolbenpumpe, deren Saugseite 28 von einem als Rückschlagventil ausgebildeten und im Inneren der Hubkolbenpumpe untergebrachten Pumpeneinlassventil 30 gesteuert ist. Eine Druckseite 38 der Hubkolbenpumpe wird von einem Pumpenauslassventil 32 gesteuert, welches ebenfalls als Rückschlagventil ausgebildet und im Inneren des Druckerzeugers 26 angeordnet ist. Stromabwärts des Umschaltventils 12 und stromaufwärts des Druckaufbauventils 16 ist die Hubkolbenpumpe mit ihrer Druckseite 38 mit dem Bremskreis kontaktiert. Das Pumpenauslassventil 32 verhindert dabei, dass Druckmittel aus dem Bremskreis zurück in das Innere des Druckerzeugers 26 strömt.

An die Saugseite 28 des Druckerzeugers 26 ist zusätzlich zur Radbremse 14 der Hauptbremszylinder 10 der Fahrzeugbremsanlage angeschlossen. Diese Verbindung ist von einem Hochdruckschaltventil 34 gesteuert, das normal sperrt und durch elektromagnetische Ansteuerung in eine Durchlassstellung umschaltbar ist. Über das Hochdruckschaltventil 34 kann der Druckerzeuger 26 Druckmittel direkt aus dem Hauptbremszylinder 10 ansaugen, falls die vom Pufferspeicher 24 vorgehaltene Menge an Druckmittel für einen notwendigen Bremsdruckaufbau im Bremskreis nicht ausreichen sollte.

Da der Fall eintreten kann, dass bei geschlossenem Umschaltventil 12 der Druck in der Druckmittelverbindung vom Hochdruckschaltventil 34 zur Saugseite 28 des Druckerzeugers 26 höher ist als im Rücklauf 20 der Radbremse 14, ist ein zusätzliches Sperrventil 36 stromaufwärts des Pufferspeichers 24 angeordnet. Dieses verhindert, dass Druckmittel aus der Druckmittelverbindung vom Hochdruckschaltventil 34 zur Saugseite des Druckerzeugers 26 in den Pufferspeicher 24 einströmt. Dazu ist das Sperrventil 36 in Richtung von der Radbremse 14 zur Saugseite 28 des Druckerzeugers 26 durchströmbar ausgebildet und sperrt die Gegenrichtung dazu ab.

Bei Bremsvorgängen mit Antiblockierschutzregelung (ABS-Bremsvorgängen), wird der Bremsdruck vom Fahrer durch Betätigung des Bremspedals des Hauptbremszylinders 10 erzeugt und über das in Offenstellung befindliche Umschaltventil 12 zum ebenfalls geöffneten Druckaufbauventil 16 bzw. der nachgeordneten Radbremse 14 weitergeleitet. Der erhöhte Bremsdruck liegt somit auch an einer Druckseite 38 des Druckerzeugers 26 bzw. am Pumpenauslassventil 32 an.

Muss nun der Bremsdruck an der Radbremse 14 reduziert werden, z.B. weil das zugeordnete Rad zu blockieren droht, wird das der Radbremse 14 zugeordnete Druckabsenkventil 22 auf Durchlass geschalten und der Druckerzeuger 26 wird angetrieben, um das in den Pufferspeicher 24 einströmende Druckmittel von dort anzusaugen und unter erhöhtem Druck an dem nunmehr seine Sperrstellung einnehmenden Druckaufbauventil 16 für einen eventuell nachfolgenden Bremsdruckaufbau vorzulagern. Dabei erschwert das hohe Druckniveau auf der Druckseite 38 des Druckerzeugers 26 dessen Anlaufen, weil letzterer quasi gegen den anstehenden hohen Druck aus dem Hauptbremszylinder 10 anzukämpfen hat. Am Antrieb des Druckerzeugers 26 steigt folglich der Anlaufstrom, was eine entsprechend angepasste Auslegung dieses Antriebs erforderlich macht. Dieser Effekt wird noch verstärkt durch aktuelle Systemanforderungen betreffend das pro Zeiteinheit förderbare Druckmittelvolumen durch den Druckerzeuger 26. Dieses Druckmittelvolumen soll möglichst groß sein, um in möglichst kurzer Zeit einen hohen Bremsdruck in der Radbremse 14 aufzubauen, um drohende Kollisionen mit anderen Verkehrsteilnehmern, insbes. mit Fußgängern, abzumildern oder gar zu vermeiden.

Zur Sicherstellung des Anlaufs des Druckerzeugers 26 trotz vorherrschendem Gegendruck auf dessen Druckseite 38 sind erfindungsgemäß Mittel 40 vorgesehen, die eine Beaufschlagung der Druckseite 38 des Druckerzeugers 26 mit dem Druck des Hauptbremszylinders 10 verhindern. Bei diesen Mitteln 40 handelt es sich vorzugsweise um ein dem Pumpenauslassventil 32 in Strömungsrichtung nachgeordnetes Rückschlagventil, das in Förderrichtung des Druckerzeugers 26 durchströmbar ist und das entgegen dieser Förderrichtung sperrt. Ein derartiges Rückschlagventil kann besonders einfach und robust beispielsweise als federloses Ventil, mit einem druckbetätigten Ventilschließkörper und einem vom Ventilschließkörper gesteuerten Ventilsitz ausgebildet sein. Als Ventilschließkörper sind Kugeln oder Ventilplatten gleichermaßen einsetzbar, wohingegen der Ventilsitz als Flachsitz, als Kegelsitz oder sphärisch ausgebildet werden kann. Die Darstellung des Rückschlagventils in der Figur 1 ist diesbezüglich lediglich schematisch zu verstehen. Der Ventilschließkörper wird vom Druck des Hauptbremszylinders 10 gegen den zugeordneten Ventilsitz gepresst und verhindert, dass sich dieser Druck bis zum Pumpenauslassventil 32 hin ausbreiten kann.

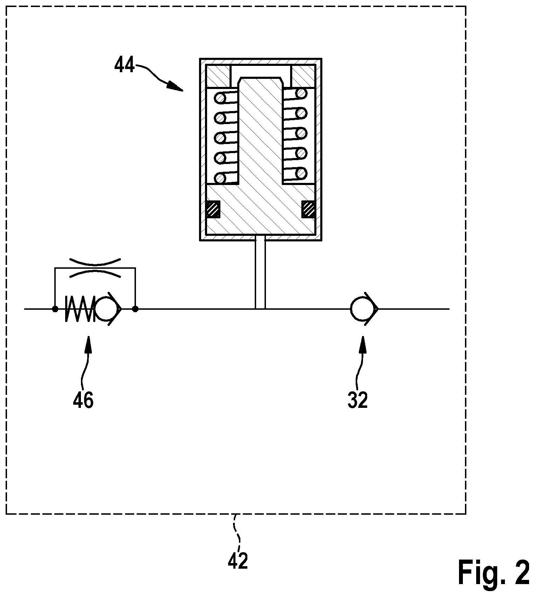

Im Leitungsbereich zwischen dem Pumpenauslassventil 32 und den erfindungsgemäßen Mitteln 40 kann eine Pulsationdämpfungseinrichtung 42 angeordnet sein, um Druckpulsationen zu dämpfen, die insbesondere bei Druckerzeugern in Form Hubkolbenpumpen aufgrund deren zyklischen Arbeitsprinzips auftreten. Den grundsätzlichen Aufbau derartiger Pulsationsdämpfungseinrichtungen 42 offenbart Figur 2; in Figur 1 ist der Einfachheit halber der Druckerzeuger 26 ohne eine solche Pulsationsdämpfungseinrichtung dargestellt.

Die Pulsationsdämpfungseinrichtung 42 nach Figur 2 ist stromabwärts des Pumpenauslassventils 32 angeordnet und setzt sich aus einem in seinem Volumen druckabhängig veränderbaren Pulsationsdämpfer 44, auch als C-Glied bezeichnet, und einer diesem Pulsationsdämpfer 44 nachgeordneten Drossel 46, bezeichnet als R-Glied, zusammen. Der Pulsationsdämpfer 44 weist wenigstens eine elastisch verform- oder verlagerbare Wand auf, die beispielsweise von einer Membran, einem hohlkörperförmigen Balg oder einem federbeaufschlagten Kolben, wie in Fig.2 gezeigt, ausgebildet sein kann. Die dem Pulsationsdämpfer 44 nachgeordnete Drossel 46 kann als Festdrossel mit konstantem Strömungsquerschnitt oder als dynamische Drossel mit einem druckabhängig veränderbaren Strömungsquerschnitt ausgebildet sein. Die Volumenaufnahme des Pulsationsdämpfers 44 ist durch geeignete Wahl der Elastizität der Wand, des Balgs bzw. der einer Verlagerung des Kolbens entgegen wirkenden Rückstellkraft eines elastischen Elements in Form einer Feder, auf das Fördervolumen des Druckerzeugers 26 derart abgestimmt, dass der Pulsationsdämpfer 44 wenigstens das Volumen eines einzigen, nämlich beim Anlaufen des Druckerzeugers 26 des ersten Förderhubs, aufnehmen kann. Mit einer derartige Dimensionierung des Pulsationsdämpfers 44 lässt sich der Anlauf des Druckerzeugers 26 sicherstellen und der Anlaufstrom des Antriebs gegenüber einer konventionell ausgeführten Fahrzeugbremsanlage reduzieren. Dies wiederum ermöglicht eine Optimierung des Antriebs des Druckerzeugers 26 hinsichtlich seiner äußeren Abmessungen, seines Gewichts und seiner Kosten, ohne Abstriche beim Fördervolumen des Druckerzegers 26 pro Zeiteinheit hinnehmen zu müssen.

Nach erfolgreichem Anlaufen des Druckerzeugers 26 reichen zur Aufrechthaltung von dessen Betrieb Ströme aus, die nochmals geringer sind, als der Anlaufstrom des Antriebs einer erfindungsgemäß ausgebildeten Fahrzeugbremsanlage.

Selbstverständlich sind Änderungen oder Ergänzungen am beschriebenen Ausführungsbeispiel möglich, ohne vom Grundgedanken der Erfindung abzuweichen.

In diesem Zusammenhang sei erwähnt, dass es sich bei der beschriebenen Fahrzeugbremsanlage um eine schlupfregelbare Fahrzeugbremsanlage mit Antiblockierschutz-, Antriebsschlupf und Fahrdynamikregelung handelt. Die Erfindung ist jedoch gleichermaßen auch auf Fahrzeugbremsanlagen anwendbar, die nur mit Antiblockierschutzregelung ausgestattet sind. Bekanntlich weisen die Bremskreise derartige Fahrzeugbremsanlagen beispielsweise keine Umschaltventile 10 oder Hochdruckschaltventile 34 auf, entsprechen ansonsten aber der beschriebenen und in Figur 1 dargestellten Ausführungsform.

## Patentansprüche

1. Schlupfregelbare Fahrzeugbremsanlage mit einem antreibbaren Druckerzeuger (26) zur Versorgung wenigstens einer Radbremse (14) mit Druckmittel,
wobei der Druckerzeuger (26) mit seiner Saugseite (28) an einen von einem Druckabsenkventil (22) steuerbaren Rücklauf (20) der Radbremse (14) und mit seiner Druckseite (38) an einen von einem Druckaufbauventil (16) steuerbaren und mit einem betätigbaren Hauptbremszylinder (10) der Fahrzeugbremsanlage verbundenen Zulauf (18) der Radbremse (14) angeschlossen ist und
wobei der Druckerzeuger (26) zur Steuerung des Druckmitteldurchsatzes mit wenigstens einem Pumpeneinlassventil (30) und mit wenigstens einem Pumpenauslassventil (32) ausgestattet ist, **dadurch gekennzeichnet,**
**dass** stromabwärts des Pumpenauslassventils (32) Mittel (40) vorgesehen sind, die eine Beaufschlagung der Druckseite (38) des Druckerzeugers (26) mit dem Druck des Hauptbremszylinders (10) verhindern.

2. Schlupfregelbare Fahrzeugbremsanlage nach Anspruch 1, **dadurch gekennzeichnet, dass** die Mittel (40) ein Rückschlagventil umfassen, das in Förderrichtung des Druckerzeugers (26) durchströmbar ist und das entgegen der Förderrichtung des Druckerzeugers (26) sperrt.

3. Schlupfregelbare Fahrzeugbremsanlage nach Anspruch 1 oder 2, **dadurch gekennzeichnet, dass** das Rückschlagventil ein federloses Ventil mit einem druckbeaufschlagten Ventilschließkörper und einem vom Ventilschließkörper gesteuerten Ventilsitz ist.

4. Schlupfregelbare Fahrzeugbremsanlage nach Anspruch 3, **dadurch gekennzeichnet, dass** der Ventilschließkörper als Kugel oder als Ventilplatte ausgebildet ist.

5. Schlupfregelbare Fahrzeugbremsanlage nach einem der Ansprüche 1 bis 4, **dadurch gekennzeichnet, dass** der Druckerzeuger (26) und die Mittel (40) zu einer Baueinheit zusammengefasst sind.

6. Schlupfregelbare Fahrzeugbremsanlage nach einem der Ansprüche 1 bis 5, **dadurch gekennzeichnet, dass** der Druckerzeuger (26) eine Hubkolbenpumpe ist, die mit einer Pulsationsdämpfungseinrichtung (42) ausgestattet ist,
wobei die Pulsationsdämpfungseinrichtung (42) stromabwärts des Pumpenauslassventils (32) und stromaufwärts der Mittel (40) angeordnet ist.

7. Schlupfregelbare Fahrzeugbremsanlage nach Anspruch 6, **dadurch gekennzeichnet, dass** die Pulsationsdämpfungseinrichtung (42) einen im Volumen druckabhängig veränderliche Pulsationsdämpfer (44) und eine Drossel (46)aufweist und dass der Pulsationsdämpfer (44) zumindest das Fördervolumen des Druckerzeugers (26) während eines Förderhubs aufnimmt.

8. Schlupfregelbare Fahrzeugbremsanlage nach Anspruch 7, **dadurch gekennzeichnet, dass** der Pulsationsdämpfer (44) der Pulsationsdämpfungseinrichtung (42) wenigstens eine elastisch verformbare Membran oder einen elastisch verformbaren Balg oder einen entgegen der Kraft eines elastischen Elements, insbes. einer Feder, beweglichen Kolben aufweist.

## Claims

1. Vehicle brake system with wheel slip control, having a drivable pressure generator (26) for supplying at least one wheel brake (14) with fluid,
wherein the pressure generator (26) is connected by its suction side (28) to a return (20) from the wheel brake (14) controllable by a pressure reduction valve (22) and by its delivery side (38) to an inlet (18) of the wheel brake (14) controllable by a pressure build-up valve (16) and connected to an actuatable brake master cylinder (10) of the vehicle brake system, and
wherein the pressure generator (26), for controlling the fluid rate of flow, is equipped with at least one pump inlet valve (30) and with at least one pump discharge valve (32), **characterized in that** downstream of the pump discharge valve (32) means (40) are provided, which prevent the pressure of the brake master cylinder (10) acting on the delivery side (38) of the pressure generator (26).

2. Vehicle brake system with wheel slip control according to Claim 1, **characterized in that** the means (40) comprise a non-return valve, which allows a flow to pass in the delivery direction of the pressure generator (26) and which closes in the opposite direction to the delivery direction of the pressure generator (26).

3. Vehicle brake system with wheel slip control according to Claim 1 or 2, **characterized in that** the non-return valve is a valve without springs having a pressure-loaded valve closing member and a valve seat controlled by the valve closing member.

4. Vehicle brake system with wheel slip control according to Claim 3, **characterized in that** the valve closing member is embodied as a ball or as a valve plate.

5. Vehicle brake system with wheel slip control according to one of Claims 1 to 4, **characterized in that** the pressure generator (26) and the means (40) are combined to form one standard unit

6. Vehicle brake system with wheel slip control according to one of Claims 1 to 5, **characterized in that** the pressure generator (26) is a reciprocating piston pump, which is equipped with a pulsation damping device (42),
wherein the pulsation damping device (42) is arranged downstream of the pump discharge valve (32) and upstream of the means (40).

7. Vehicle brake system with wheel slip control according to Claim 6, **characterized in that** the pulsation damping device (42) comprises a pulsation damper (44) of a volume capable of varying as a function of the pressure and a restrictor (46), and **in that** the pulsation damper (44) receives at least the volumetric delivery of the pressure generator (26) during a discharge stroke.

8. Vehicle brake system with wheel slip control according to Claim 7, **characterized in that** the pulsation damper (44) of the pulsation damping device (42) comprises at least one elastically deformable diaphragm or an elastically deformable bellows or a piston moveable against the force of an elastic element, in particular a spring.

## Revendications

1. Système de freinage de véhicule à régulation du patinage, comprenant un générateur de pression (26) pouvant être entraîné pour alimenter au moins un frein de roue (14) en fluide sous pression,
dans lequel le générateur de pression (26) est raccordé par son côté aspiration (28) à un retour (20), pouvant être commandé par une soupape de réduction de pression (22), du frein de roue (14), et est raccordé par son côté pression (38) à une arrivée (18), pouvant être commandée par une soupape d'augmentation de pression (16), du frein de roue (14) et à un maître-cylindre de frein (10), pouvant être actionné, du système de freinage de véhicule, et
dans lequel le générateur de pression (26) est équipé d'au moins une soupape d'entrée de pompe (30) et d'au moins une soupape de sortie de pompe (32) pour commander le débit de fluide de pression,
**caractérisé en ce que** des moyens (40) qui empêchent une sollicitation du côté pression (38) du générateur de pression (26) par la pression du maître-cylindre de frein (10) sont prévus en aval de la soupape de sortie de pompe (32).

2. Système de freinage de véhicule à régulation du patinage selon la revendication 1, **caractérisé en ce que** les moyens (40) comprennent une soupape de retenue qui peut être traversée dans la direction de débit du générateur de pression (26) et qui bloque à l'opposé de la direction de débit du générateur de pression (26).

3. Système de freinage de véhicule à régulation du patinage selon la revendication 1 ou 2, **caractérisé en ce que** la soupape de retenue est une soupape sans ressort dotée d'un corps de fermeture de soupape sous pression et d'un siège de soupape commandé par le corps de fermeture de soupape.

4. Système de freinage de véhicule à régulation du patinage selon la revendication 3, **caractérisé en ce que** le corps de fermeture de soupape est réalisé sous forme de sphère ou de lame de soupape.

5. Système de freinage de véhicule à régulation du patinage selon l'une quelconque des revendications 1 à 4, **caractérisé en ce que** le générateur de pression (26) et les moyens (40) sont regroupés en une unité modulaire.

6. Système de freinage de véhicule à régulation du patinage selon l'une quelconque des revendications 1 à 5, **caractérisé en ce que** le générateur de pression (26) est une pompe à piston alternatif qui est équipée d'un dispositif d'amortissement de pulsation (42), le dispositif d'amortissement de pulsation (42) étant disposé en aval de la soupape de sortie de pompe (32) et en amont des moyens (40).

7. Système de freinage de véhicule à régulation du patinage selon la revendication 6, **caractérisé en ce que** le dispositif d'amortissement de pulsation (42) présente un amortisseur de pulsation (44) variable en volume en fonction de la pression et un étrangleur (46), et **en ce que** l'amortisseur de pulsation (44) absorbe au moins le volume de débit du générateur de pression (26) pendant une course de débit.

8. Système de freinage de véhicule à régulation du patinage selon la revendication 7, **caractérisé en ce que** l'amortisseur de pulsation (44) du dispositif d'amortissement de pulsation (42) présente au moins un diaphragme à déformation élastique ou un soufflet à déformation élastique ou un piston mobile à l'encontre de la force d'un élément élastique, en particulier d'un ressort.
